# EUROPÄISCHE PATENTSCHRIFT

(11) **EP 0 455 886 B1**
(45) Veröffentlichungstag und Bekanntmachung des Hinweises auf die Patenterteilung: **03.08.1994**
(21) Anmeldenummer: 90125355.9
(22) Anmeldetag: 22.12.1990
(51) Int. Cl.: G02F 1/133, G02F 1/1335, F21V 29/00

(54) **Flüssigkristallanzeige**
Liquid crystal display
Affichage à cristaux liquides

(30) Priorität: 30.04.1990 DE 4013846
(43) Veröffentlichungstag der Anmeldung: 13.11.1991
(73) Patentinhaber: VDO Luftfahrtgeräte Werk GmbH, D-60423 Frankfurt (DE)
(72) Erfinder: Wieland, Winfried, W-6380 Bad Homburg (DE); Bärenfänger, Mathias, W-6072 Dreieich (DE); Motamedian, Djalal, W-6000 Frankfurt/Main (DE)
(74) Vertreter: Gornott, Dietmar, Dipl.-Ing.

(56) Entgegenhaltungen:
- DE-A- 3 710 628
- US-A- 4 748 546
- PATENT ABSTRACTS OF JAPAN, Band 12, Nr. 125 (P-691)[2972], 19. April 1988;& JP-A-62 250 424
- PATENT ABSTRACTS OF JAPAN, Band 12, Nr. 203 (P-715)[3050], 11. Juni 1988;& JP-A-63 5321

## Beschreibung

Die Erfindung bezieht sich auf eine Flüssigkristallanzeige mit einer von einem Gehäuse gehaltenen Flüssigkristallzelle, welche von einer im Inneren des Gehäuses angeordneten Leuchtstoffröhre durchleuchtet ist. Solche meist als Flachdisplays bezeichneten Flüssigkristallanzeigen werden als Instrumentierung in Luft- See- und Landfahrzeugen sowie zur Anlagen- und Kraftwerksüberwachung eingesetzt und sind sind bekannt.

Schwierigkeiten bereitet bei den bekannten Flüssigkristallanzeigen die Abführung der von der Leuchtstoffröhre erzeugten Wärme, da die Leuchtstoffröhre im Inneren des Gehäuses untergebracht ist. Die von ihr abgegebene Wärme gelangt über die Luft und das die Treiberelektronik tragende innere Gehäuse durch die elektronischen Bauteile hindurch und dann erneut über eine Luftstrecke zum äußeren Gehäuse, wo sie an die Außenluft abgegeben werden kann. Man kann zwar durch Wärmeleitblöcke die Wärmeübertragung zum äußeren Gehäuse verbessern, jedoch führen solche Maßnahmen nur zu einem begrenzten Erfolg. Von der Kühlwirkung her ideal wäre es natürlich, wenn man die Leuchtstoffröhre von einem Kühlluftstrom anblasen würde.

Aus der JP-A-62-250424 ist die Anordnung eines Gebläses hinter den Leuchtstoffröhren bekannt, dessen Luftstrom auf die Leuchtstoffröhren gerichtet ist. Der von dem Gebläse erzeugte Luftstrom gelangt beim Kühlen der Leuchtstoffröhren aber auch bis auf die Rückseite der Flüssigkristallzelle, so daß sich Schmutzpartikel, die sich in dem Luftstrom befinden, auf der Rückseite der Flüssigkristallzelle absetzen können. Dadurch kommt es zu einer Verschmutzung der Flüssigkristallzelle und einer Reduzierung der Erkennbarkeit der Anzeige.

Aus der JP-A-63-005321 ist eine Flüssigkristallanzeige bekannt, die auf der Rückseite ihrer Flüssigkristallzelle eine Streuscheibe besitzt. Hinter der Streuscheibe sind Leuchtstoffröhren zur Beleuchtung der Flüssigkristallanzeige vorhanden. Im Abstand zu den Leuchtstoffröhren ist weiterhin eine Kühlplatte mit von den Leuchtstoffröhren wegweisenden Kühlrippen angeordnet.

Eine wärmeleitende Befestigung der Leuchtstoffröhren auf der Kühlplatte ist nicht vorhanden. Weiterhin ist auch kein Gebläse zur Kühlung der Kühlplatte vorhanden.

Der Erfindung liegt die Aufgabe zugrunde, eine Flüssigkristallanzeige gemäß dem Oberbegriff des Anspruchs 1 so auszubilden, daß sie möglichst gut gekühlt werden kann, ohne daß eine Gefahr der Verschmutzung der Flüssigkristallzelle besteht.

Diese Aufgabe wird erfindungsgemäß durch die kennzeichnenden Merkmale des Anspruchs 1 gelöst.

Durch diese wärmeleitende Verbindung der Leuchtstoffröhre mit der Frontplatte eines Kühlkörpers gelangt die von der Leuchtstoffröhre erzeugte Wärme in den rückwärtigen Bereich des Kühlkörpers. Dort kann man Kühlluft entlang der Rückseite der Frontplatte und entlang der Kühlrippen führen, ohne daß sie gegen die Flüssigkristallzelle gelangt, so daß von ihr keine Staubteilchen zur Flüssigkristallzelle transportiert werden können. Dank der Erfindung ist eine sehr intensive Kühlung möglich, ohne daß eine Verschmutzungsgefahr für die Flüssigkristallzelle besteht.

Die Hauptwärme wird bei einer Leuchtstoffröhre in den Lampenenden erzeugt. Deshalb ist es vorteilhaft, wenn gemäß einer Ausgestaltung der Erfindung die Frontplatte für die beiden Lampenenden der Leuchtstoffröhre jeweils einen abgedichteten Durchlaß hat, durch den jeweils ein Lampenende der Leuchtstoffröhre zur Rückseite der Frontplatte in den Kühlluftstrom ragt. Hierdurch erhalten die Lampenenden mehr Abstand von der vor Wärme zu schützenden Flüssigkristallzelle und gelangen unmittelbar in den Kühlluftstrom, so daß sie besonders intensiv gekühlt werden können.

Zur weiteren Verbesserung der Kühlwirkung trägt es bei, wenn die Lampenenden mit dem übrigen Bereich der Leuchtstoffröhre einen spitzen Winkel bilden. Dadurch haben die Lampenenden einen größeren Abstand vom oberen Bereich des Gehäuses, wo sich ein Strömungstotraum ausbilden könnte. Die Lampenenden gelangen durch den spitzwinkligen Verlauf in einen Bereich, wo zuverlässig mit hohen Kühlluftgeschwindigkeiten gerechnet werden kann.

Besonders kompakt ist die Flüssigkristallanzeige ausgebildet, wenn das Gebläse im Kühlkörper zwischen den Kühlrippen angeordnet ist.

Die Bautiefe der Flüssigkristallanzeige wird besonders gering, wenn gemäß einer anderen Weiterbildung der Erfindung mehrere Gebläse vorgesehen sind.

Fertigungstechnisch vorteilhaft ist es, wenn die Leuchtstoffröhre auf einer Tragplatte befestigt ist, welche ihrerseits wärmeleitend auf der Frontplatte des Kühlkörpers befestigt ist. Hierdurch kann man die Leuchtstoffröhre zusammen mit der Tragplatte als eine Baueinheit ausbilden, die leicht mit der Frontplatte zu verbinden ist.

Der Wärmeübergang von der Leuchtstoffröhre zum Kühlkörper ist besonders intensiv, wenn die Leuchtstoffröhre durch einen wärmeleitenden Kleber auf der Tragplatte oder der Frontplatte befestigt ist. Hinzu kommt, daß eine solche Verbindung sehr kostengünstig ist.

Eine gegen eine ebene Fläche anliegende Leuchtstoffröhre hat mit der Fläche lediglich Linienberührung, wodurch eine Wärmeleitung erschwert ist. Statt einer Linienberührung kann man auf einfache Weise eine großflächige Flächenberührung erreichen, wenn gemäß einer anderen, vorteilhaften Ausgestaltung der Erfindung in der der Flüssigkristallzelle zugewandten Seite der Tragplatte oder der Frontplatte eine entsprechend der Leuchtstoffröhre verlaufende, den wärmeleitenden Kleber aufnehmende Nut vorgesehen ist, in welche die Leuchtstoffröhre teilweise eingebettet ist.

Die Flüssigkristallanzeige ist insgesamt besonders kostengünstig zu fertigen, wenn der Kühlkörper mit der Leuchtstoffröhre und dem Gebläse oder den Gebläsen und gegebenenfalls weiteren Bauteilen eine Zentraleinheit bildet, welche in ein auf seinen vier Mantelflächen die Treiberelektronik aufweisendes inneres Gehäuse eingeschoben ist.

Ein unerwünschter Wärmefluß zur Treiberelektronik hin kann dadurch herabgesetzt werden, daß das innere Gehäuse innenseitig mit einer Wärmeisolation versehen ist.

Wenn Flüssigkristallanzeigen unmittelbar nebeneinander und übereinander angeordnet werden sollen, dann ist es erforderlich, daß die Kühlluftzufuhr und -abfuhr an der Rückseite der Flüssigkristallanzeige erfolgt. Das ist besonders einfach möglich, wenn der Kühlkörper vollständig in das innere Gehäuse untergebracht ist und wenn die Rückseite des äußeren Gehäuses und damit auch des inneren Gehäuses und der Zentraleinheit von einer zumindest einen Lufteinlaß und Luftauslaß aufweisenden Rückwand abgedeckt ist.

Falls nach oben und unten genügend Platz für das Ansaugen und Abblasen der Kühlluft vorhanden ist, dann kann man die Flüssigkristallanzeige gemäß einer anderen Ausgestaltung der Erfindung auch so ausbilden, daß der Kühlkörper nach hinten aus dem inneren Gehäuse ragt und daß der Lufteinlaß und der Luftauslaß unten bzw. oben im inneren Gehäuse und äußeren Gehäuse vorgesehen sind.

Die Wärmeübertragung von der Leuchtstoffröhre zur Flüssigkristallzelle kann man auf gleiche Weise wie bei einer Thermoskanne dadurch noch weiter vermindern, wenn der Raum zwischen der Rückseite der Flüssigkristallzelle und der Vorderseite der Frontplatte, in welchem die Leuchtstoffröhre angeordnet ist, einen Unterdruckraum bildet.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die
- Fig. 1: einen schematischen Längsschnitt durch eine erfindungsgemäß gestaltete Flüssigkristallanzeige,
- Fig. 2: eine Ansicht von hinten auf eine Zentraleinheit der Flüssigkristallanzeige,
- Fig. 3: eine Draufsicht auf die Zentraleinheit,
- Fig. 4: eine Ansicht einer Tragplatte mit einer aufgebrachten Leuchtstoffröhre,
- Fig. 5: eine Seitenansicht der Tragplatte mit der Leuchtstoffröhre,
- Fig. 6: einen Schnitt durch die Tragplatte mit der auf ihr befestigten Leuchtstoffröhre.

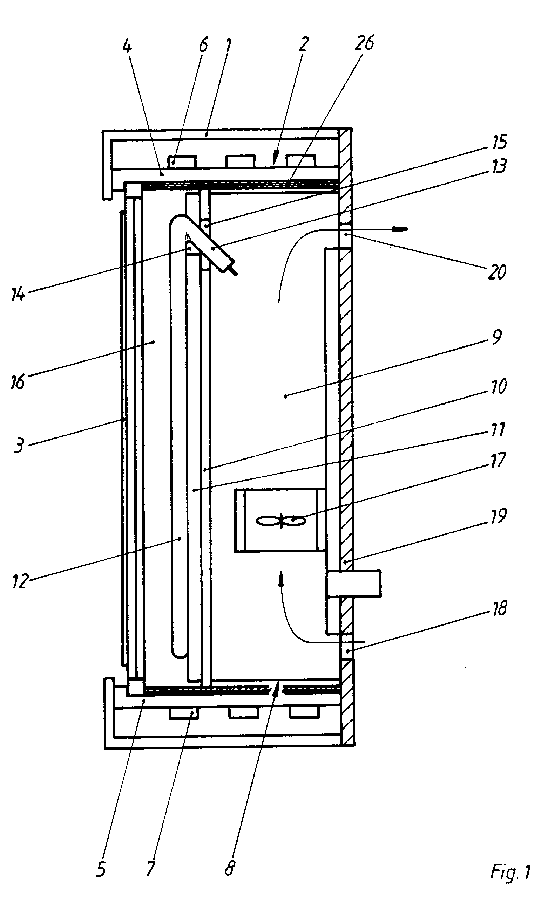

Die Figur 1 zeigt ein äußeres Gehäuse 1, in welches ein inneres Gehäuse 2 von der Rückseite her eingeschoben und befestigt ist. Das innere Gehäuse 2 haltert mit seiner Vorderseite eine Flüssigkristallzelle 3. Auf seinen vier Mantelflächen, von denen in Figur 1 zwei Mantelflächen 4, 5 zu sehen sind, trägt es die Treiberelektronik 6, 7 für die Flüssigkristallzelle 3.

Wichtig für die Erfindung ist eine Zentraleinheit 8, die von der Rückseite her in das innere Gehäuse 2 eingeschoben ist und einen Kühlkörper 9 aus Metall aufweist, der eine Frontplatte 10 hat, auf der unter Zwischenschaltung einer metallischen Tragplatte 11 auf der Seite der Flüssigkristallzelle 3 eine Leuchtstoffröhre 12 befestigt ist. Diese Leuchtstoffröhre 12 ragt mit ihren Lampenenden 13 durch jeweils einen Durchlaß 14 in der Tragplatte 11 und der Frontplatte 10 in den Kühlkörper 9 hinein, wobei die Lampenenden 13 spitzwinklig zum übrigen Leuchtstoffröhrenbereich verlaufen.

Die Frontplatte 10 kann so ausgebildet sein, daß zwischen der Flüssigkristallzelle 3 und der Frontplatte 10 ein Raum 16 entsteht, der teilevakuiert werden kann.

Innerhalb des Kühlkörpers 9 ist ein Gebläse 17 dargestellt, welches Kühlluft durch einen Lufteinlaß 18 einer Rückwand 19 ansaugt, durch den Kühlkörper 9 fördert und über einen Luftauslaß 20 an der Oberseite der Rückwand 19 nach außen abbläst. Dadurch werden die Lampenenden 13 unmittelbar vom Kühlluftstrom gekühlt. Die übrige Wärme der Leuchtstoffröhre gelangt über die Tragplatte 11 und die Frontplatte 10 zur Rückseite des Kühlkörpers 9, wo sie von der Kühlluft aufgenommen wird, ohne daß hierbei Kühlluft gegen die Flüssigkristallzelle 3 zu gelangen vermag. Ein Wärmefluß zur Treiberelektronik 6, 7 kann zusätzlich durch eine innenseitige Wärmeisolation 26 des inneren Gehäuses 2 vermindert werden. Um den beschriebenen Luftstrom zu ermöglichen, müssen die Flexteile der oberen und unteren Treiberboards so gefaltet werden, daß sie seitlich aus dem Innengehäuse heraustreten.

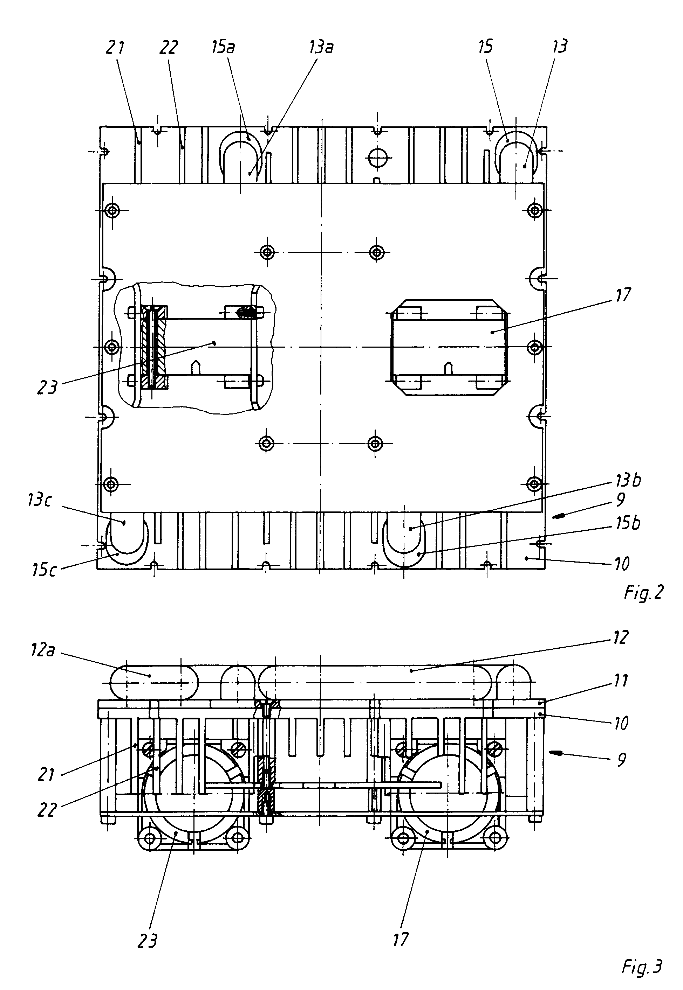

Die Figur 2 läßt erkennen, daß der Kühlkörper 9 auf der Rückseite seiner Frontplatte 10 nebeneinander eine Vielzahl von senkrecht verlaufenden Kühlrippen, beispielsweise die Kühlrippen 21, 22 aufweist. Zu sehen ist weiterhin, daß zusätzlich zum Gebläse 17 ein weiteres, baugleiches Gebläse 23 im Kühlkörper 9 angeordnet ist. Im oberen Bereich erkennt man die Lampenenden 13, 13a, welche jeweils durch einen abzudichtenden Durchlaß 15, 15a in den Kühlkörper 9 hineingeführt sind. In der Praxis wird man für eine großflächige Flüssigkristallanzeige zwei mäanderförmig verlaufende Leuchtstoffröhren 12 verwenden. Die Figur 2 zeigt deshalb, daß auch im unteren Bereich des Kühlkörpers 9 zwei abzudichtende Durchlässe 15b, 15c vorgesehen sein können, durch die die Enden 13b, 13c einer zweiten Leuchtstoffröhre ragen können.

Die Figur 3 zeigt den Kühlkörper 9 mit seiner Frontplatte 10, den Kühlrippen 21, 22 und die Gebläse 23, 17. Weiterhin sind zwei Leuchtstoffröhren 12, 12a zu sehen, welche auf der Tragplatte 11 befestigt sind.

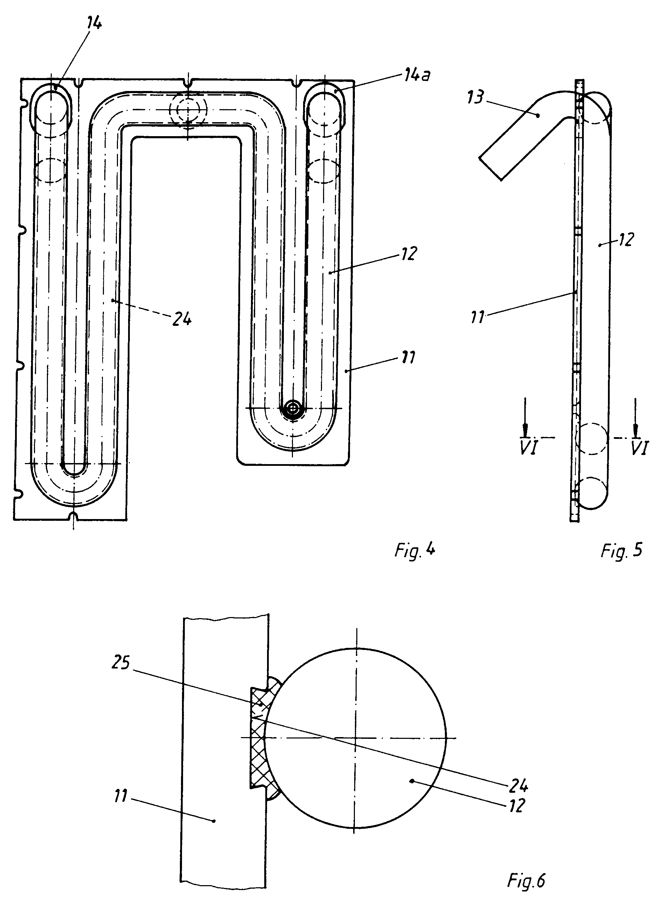

Die Figur 4 zeigt eine Tragplatte 11 mit abzudichtenden Durchlässen 14, 14a und einer auf ihr befestigten, mäanderförmigen Leuchtstoffröhre 12.

Der Figur 5 ist zu entnehmen, daß das Lampenende 13 spitzwinklig zur Leuchtstoffröhre 12 verläuft.

Figur 6 verdeutlicht die Befestigung der Leuchtstoffröhre 12 auf der Tragplatte 11. Die Tragplatte 11 hat in ihrer der Leuchtstoffröhre 12 zugewandten Seite eine entsprechend der Leuchtstoffröhre 12 mäanderförmig verlaufende Nut 24, in die ein wärmeleitender Kleber 25 eingegeben ist. Die Leuchtstoffröhre 12 ist in diesen Kleber 25 eingebettet, so daß sie gut wärmeleitend mit der Tragplatte 11 verbunden ist.

## Patentansprüche

1. Flüssigkristallanzeige mit einer von einem Gehäuse gehaltenen Flüssigkristallzelle (3), welche von einer im Inneren des Gehäuses angeordneten Leuchtstoffröhre (12) durchleuchtet ist, wobei die von der Leuchtstoffröhre (12) erzeugte Wärme durch den Luftstrom eines Gebläses (17, 23) abführbar ist, dadurch gekennzeichnet, daß das Gehäuse hinter der Flüssigkristallzelle (3) durch die Frontplatte (10) eines Kühlkörpers (9) derart unterteilt ist, daß zwischen Flüssigkristallzelle (3) und Frontplatte (10) ein Raum (16) gebildet ist, in dem die Leuchtstoffröhre (12) angeordnet ist, wobei die Leuchtstoffröhre (12) wärmeleitend auf dem Kühlkörper (9) befestigt ist, daß die Frontplatte (10) an ihrer dem Raum (16) abgewandten Seite angeformte Kühlrippen (21, 22) aufweist, die in den rückwärtigen Gehäusebereich weisen und daß zumindest ein Gebläse (17, 23) zur Erzeugung eines Luftstromes im Inneren des Gehäuses (1, 2) entlang der Kühlrippen (21, 22) vorgesehen ist.

2. Flüssigkristallanzeige nach Anspruch 1, dadurch gekennzeichnet, daß die Frontplatte (10) für die beiden Lampenenden (13) der Leuchtstoffröhre (12) jeweils einen abgedichteten Durchlaß (15) hat, durch den jeweils ein Lampenende (13) der Leuchtstoffröhre (12) zur Rückseite der Frontplatte (10) in den Kühlluftstrom ragt.

3. Flüssigkristallanzeige nach Anspruch 2, dadurch gekennzeichnet, daß die Lampenenden (13) mit dem übrigen Bereich der Leuchtstoffröhre (12) einen spitzen Winkel bilden.

4. Flüssigkristallanzeige nach zumindest einem der vorangehenden Ansprüche, dadurch gekennzeichnet, daß das Gebläse (17, 23) im Kühlkörper (9) zwischen den Kühlrippen (21, 22) angeordnet ist.

5. Flüssigkristallanzeige nach zumindest einem der vorangehenden Ansprüche, dadurch gekennzeichnet, daß mehrere Gebläse (17, 23) vorgesehen sind.

6. Flüssigkristallanzeige nach zumindest einem der vorangehenden Ansprüche, dadurch gekennzeichnet, daß die Leuchtstoffröhre (12) auf einer Tragplatte (11) befestigt ist, welche ihrerseits wärmeleitend auf der Frontplatte (10) des Kühlkörpers (9) befestigt ist.

7. Flüssigkristallanzeige nach zumindest einem der vorangehenden Ansprüche, dadurch gekennzeichnet, daß die Leuchtstoffröhre (12) durch einen wärmeleitenden Kleber (25) auf der Tragplatte (11) oder der Frontplatte (10) befestigt ist.

8. Flüssigkristallanzeige nach zumindest einem der vorangehenden Ansprüche, dadurch gekennzeichnet, daß in der der Flüssigkristallzelle (3) zugewandten Seite der Tragplatte (11) oder der Frontplatte (10) eine entsprechend der Leuchtstoffröhre (12) verlaufende, den wärmeleitenden Kleber (25) aufnehmende Nut (24) vorgesehen ist, in welche die Leuchtstoffröhre (12) teilweise eingebettet ist.

9. Flüssigkristallanzeige nach zumindest einem der vorangehenden Ansprüche, dadurch gekennzeichnet, daß der Kühlkörper (9) mit der Leuchtstoffröhre (12) und dem Gebläse (17) oder den Gebläsen (17, 23) und gegebenenfalls weiteren Bauteilen eine Zentraleinheit (8) bildet, welche in ein auf seinen vier Mantelflächen (4, 5) die Treiberelektronik (6, 7) aufweisendes inneres Gehäuse (2) eingeschoben ist.

10. Flüssigkristallanzeige nach Anspruch 9, dadurch gegekennzeichnet, daß das innere Gehäuse (2) innenseitig mit einer Wärmeisolation (26) versehen ist.

11. Flüssigkristallanzeige nach den Ansprüchen 9 oder 10, dadurch gekennzeichnet, daß der Kühlkörper (9) vollständig in dem inneren Gehäuse (2) untergebracht ist und daß die Rückseite des äußeren Gehäuses (1) und damit auch des inneren Gehäuses (2) und der Zentraleinheit (8) von einer zumindest einen Lufteinlaß (18) und Luftauslaß (20) aufweisenden Rückwand (19) abgedeckt ist.

12. Flüssigkristallanzeige nach zumindest einem der vorangehenden Ansprüche, dadurch gekennzeichnet, daß der Kühlkörper (9) nach hinten aus dem inneren Gehäuse (2) ragt und daß der Lufteinlaß (18) und der Luftauslaß (19) unten bzw. oben im inneren Gehäuse (2) und äußeren Gehäuse (1) vorgesehen sind.

13. Flüssigkristallanzeige nach zumindest einem der vorangehenden Ansprüche, dadurch gekennzeichnet, daß der Raum (16) zwischen der Rückseite der Flüssigkristallzelle (3) und der Vorderseite der Frontplatte (10), in welchem die Leuchtstoffröhre (12) angeordnet ist, einen Unterdruckraum bildet.

## Claims

1. A liquid crystal display with a liquid crystal cell (3) held by a housing and which is transilluminated by a fluorescent lamp (12) disposed in the interior of the housing, wherein the heat generated by the fluorescent lamp (12) can be dissipated by the air current of a fan (17, 23), characterised in that behind the liquid crystal cell (3) the housing is subdivided by the front panel (10) of a heat sink (9) in such a way that a space (16) is formed between the liquid crystal cell (3) and the front panel (10), in which space the fluorescent lamp (12) is disposed, wherein the fluorescent lamp (12) is fastened in a thermally conducting manner to the heat sink (9), that the front panel (10) has integrally formed cooling ribs (21, 22), which point into the back region of the housing, on its side facing away from the space (16), and that at least one fan (17, 23) is provided for producing an air current in the interior of the housing (1, 2) along the cooling ribs (21, 22).

2. A liquid crystal display according to claim 1, characterised in that the front panel (10) has a sealed passageway (15) for each of the two lamp ends (13) of the fluorescent lamp (12), through which passageway a lamp end (13) of the fluorescent lamp (12) projects in each case towards the back of the front panel (10) into the cooling air current.

3. A liquid crystal display according to claim 2, characterised in that the lamp ends (13) form an acute angle with the remaining region of the fluorescent lamp (12).

4. A liquid crystal display according to at least one of the preceding claims, characterised in that the fan (17, 23) is disposed between the cooling ribs (21, 22) in the heat sink (9).

5. A liquid crystal display according to at least one of the preceding claims, characterised in that a plurality of fans (17, 23) is provided.

6. A liquid crystal display according to at least one of the preceding claims, characterised in that the fluorescent lamp (12) is fastened to a support plate (11) which in turn is fastened in a thermally conducting manner to the front panel (10) of the heat sink (9).

7. A liquid crystal display according to at least one of the preceding claims, characterised in that the fluorescent lamp (12) is fastened to the support plate (11) or the front panel (10) by means of a thermally conducting adhesive (25).

8. A liquid crystal display according to at least one of the preceding claims, characterised in that a channel (24) which receives the thermally conducting adhesive (25) and which runs corresponding to the fluorescent lamp (12) is provided in the side of the support plate (11) or of the front panel (10) facing the liquid crystal cell (3), in which channel the fluorescent lamp (12) is partly embedded.

9. A liquid crystal display according to at least one of the preceding claims, characterised in that the heat sink (9), with the fluorescent lamp (12) and the fan (17) or the fans (17, 23) and optionally with additional components, forms a central unit (8) which is inserted into an inner housing (2) having the driving electronics (6, 7) on its four outer faces (4, 5).

10. A liquid crystal display according to claim 9, characterised in that the inner housing (2) is provided on its inside with thermal insulation (26).

11. A liquid crystal display according to claims 9 or 10, characterised in that the heat sink (9) is completely accommodated in the inner housing (2) and that the back of the outer housing (1) and thus of the inner housing (2) and of the central unit (8) also is covered by a back wall (19) having at least one air inlet (18) and air outlet (20).

12. A liquid crystal display according to at least one of the preceding claims, characterised in that the heat sink (9) projects backwards from the inner housing (2) and that the air inlet (18) and the air outlet (19) are provided at the bottom and at the top, respectively, in the inner housing (2) and in the outer housing (1).

13. A liquid crystal display according to at least one of the preceding claims, characterised in that the space (16) between the back of the liquid crystal cell (3) and the front side of the front panel (10), in which the fluorescent lamp (12) is disposed, forms a vacuum space.

## Revendications

1. Afficheur à cristaux liquides comprenant une cellule de cristaux liquides (3) supportée par un boîtier et éclairée par transparence au moyen d'un tube fluorescent (12) installé à l'intérieur du boîtier, avec évacuation de la chaleur dégagée par le tube fluorescent (12) par le courant d'air d'un ventilateur (17, 23), caractérisé en ce que, derrière la cellule de cristaux liquides (3), le boîtier est divisé par la plaque frontale (10) d'un refroidisseur (9), de manière qu'entre la cellule de cristaux liquides (3) et la plaque frontale (10) soit formé un espace (16), dans lequel est installé le tube fluorescent (12), lequel est fixé sur le refroidisseur (9) par une liaison conduisant la chaleur, que la plaque frontale (10) comporte des nervures de refroidissement (21, 22) formées sur son côté éloigné de l'espace (16) et dirigées dans la zone arrière du boîtier, et qu'au moins un ventilateur (17, 23) est prévu pour produire un courant d'air à l'intérieur du boîtier (1, 2) le long des nervures de refroidissement (21, 22).

2. Afficheur à cristaux liquides selon la revendication 1, caractérisé en ce que la plaque frontale (10) présente une traversée (15) étanchée pour chacun des deux bouts de lampe (13) du tube fluorescent (12), par laquelle un bout de lampe (13) du tube fluorescent (12) s'étend vers le côté arrière de la plaque frontale (10) dans le courant d'air de refroidissement.

3. Afficheur à cristaux liquides selon la revendication 2, caractérisé en ce que les bouts de lampe (13) forment un angle aigu avec la partie restante du tube fluorescent (12).

4. Afficheur à cristaux liquides selon au moins une des revendications précédentes, caractérisé en ce que le ventilateur (17, 23) est installé dans le refroidisseur (9) entre les nervures de refroidissement (21, 22).

5. Afficheur à cristaux liquides selon au moins une des revendications précédentes, caractérisé en ce que plusieurs ventilateurs (17, 23) sont prévus.

6. Afficheur à cristaux liquides selon au moins une des revendications précédentes, caractérisé en ce que le tube fluorescent (12) est fixé sur une plaque support (11), qui est elle-même fixée par une liaison conduisant la chaleur sur la plaque frontale (10) du refroidisseur (9).

7. Afficheur à cristaux liquides selon au moins une des revendications précédentes, caractérisé en ce que le tube fluorescent (12) est fixé sur la plaque support (11) ou la plaque frontale (10) par un adhésif (25) conduisant la chaleur.

8. Afficheur à cristaux liquides selon au moins une des revendications précédentes, caractérisé en ce que le côté, dirigé vers la cellule de cristaux liquides (3), de la plaque support (11) ou de la plaque frontale (10) présente une rainure (24) dont la configuration correspond à celle du tube fluorescent (12) et qui reçoit l'adhésif (25) conduisant la chaleur, dans lequel le tube fluorescent (12) est partiellement enfoncé.

9. Afficheur à cristaux liquides selon au moins une des revendications précédentes, caractérisé en ce que le refroidisseur (9), le tube fluorescent (12) et le ventilateur (17) ou les ventilateurs (17, 23) et, éventuellement d'autres composants, constituent une unité centrale (8) glissée dans un boîtier intérieur (2) présentant l'électronique de commande (6, 7) sur ses quatre faces latérales extérieures (4, 5).

10. Afficheur a cristaux liquides selon la revendication 9, caractérisé en ce que le boîtier intérieur (2) est pourvu intérieurement d'une isolation thermique (26).

11. Afficheur à cristaux liquides selon la revendication 9 ou 10, caractérisé en ce que le refroidisseur (9) est logé complètement dans le boîtier intérieur (2) et que le côté arrière du boîtier extérieur (1) et par suite aussi du boîtier intérieur (2) et de l'unité centrale (8), est recouvert d'une paroi arrière (19) présentant au moins une admission d'air (18) et une sortie d'air (20).

12. Afficheur à cristaux liquides selon au moins une des revendications précédentes, caractérisé en ce que le refroidisseur (19) dépasse vers l'extérieur du boîtier intérieur (2) et que l'admission d'air (18) et la sortie d'air (19) sont prévues respectivement en bas et en haut dans le boîtier intérieur (2) et le boîtier extérieur (1).

13. Afficheur à cristaux liquides selon au moins une des revendications précédentes, caractérisé en ce que l'espace (16) entre le côté arrière de la cellule de cristaux liquides (3) et le côté avant de la plaque frontale (10), espace dans lequel est installé le tube fluorescent (12), forme un espace à dépression.
